(19) Europäisches Patentamt
European Patent Office
Office européen des brevets

(11) EP 4 303 241 B1

(12) **EUROPEAN PATENT SPECIFICATION**

(45) Date of publication and mention of the grant of the patent:
**04.12.2024 Bulletin 2024/49**

(21) Application number: **22183317.1**

(22) Date of filing: **06.07.2022**

(51) International Patent Classification (IPC):
***C08F 222/10*** *(2006.01)* ***C08F 285/00*** *(2006.01)*
***C09D 4/06*** *(2006.01)* ***C08F 290/06*** *(2006.01)*

(52) Cooperative Patent Classification (CPC):
(C-Sets available)
**C09D 4/06; C08F 222/1006** (Cont.)

(54) **UV-CURABLE COMPOSITION, HARD COAT AND HARD COATED ARTICLE**

UV-HÄRTBARE ZUSAMMENSETZUNG, HARTBESCHICHTUNG UND HARTBESCHICHTETER GEGENSTAND

COMPOSITION DURCISSABLE PAR UV, REVÊTEMENT DUR ET ARTICLE À REVÊTEMENT DUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **Daikin Industries, Ltd.**
**Osaka-shi, Osaka 530-0001 (JP)**

(72) Inventors:
- **Sahraneshin, Ameneh**
  **40211 Düsseldorf (DE)**
- **Yoshida, Tomohiro**
  **40211 Düsseldorf (DE)**
- **Celik, Nilay**
  **40211 Düsseldorf (DE)**

(74) Representative: **Hoffmann Eitle**
**Patent- und Rechtsanwälte PartmbB**
**Arabellastraße 30**
**81925 München (DE)**

(56) References cited:
**JP-A- 2010 222 524**
**JP-A- 2013 132 785**
**JP-A- 2016 210 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 303 241 B1

(52) Cooperative Patent Classification (CPC): (Cont.)

C-Sets
**C08F 222/1006, C08F 222/106;**
**C08F 222/1006, C08F 290/06;**
**C08F 285/00, C08F 222/102, C08F 220/24;**
**C08F 290/067, C08F 222/1006;**
**C09D 4/06, C08F 285/00**

## Description

### Technical field

The present invention relates to a UV-curable composition, a hard coat which is obtainable by curing this composition, an article which includes the hard coat on a surface thereof and a process for producing the article.

### State of the Art

Coatings including hard coats are conventionally used for covering the surface of a substrate in order to improve the mechanical strength of the substrate, such as scratch or mar resistance. Functional coatings impart specific decorative and/or functional properties to the substrate. For example, functional additives can be incorporated into the coating formulation to change the surface properties of a substrate, such as corrosion resistance, or haptics and wear resistance, or surface energy of the substrate. Such hardcoats are disclosed in JP 2016/210995 A and JP 2013/132785 A.

The formulation of the coating depends on the desired function and the required properties thereof. In general, formulations include a resin component (also referred to as binder), a solvent and further additives. Coatings may be applied to substrates using commonly known techniques and are then hardened (cured) by means of high temperature and/or irradiation by light such as UV light.

Hard coats are selected based on their desired properties for the intended use. For example, decorative hard coats usually need to have good visual appearance, such as colour or gloss, which should be stable against weather conditions. A known approach for protection of the visual appearance in commercially available hard coats is the addition of UV-absorbers and/or hindered amine light stabilizers (HALS).

On the other hand, for functional hard coats the focus lies on specific surface properties, such as omniophobicity. In the present specification, a surface referred to as omniophobic relates to a surface that repels virtually any liquid. Hence, omniophobic hard coats exhibit both hydrophobicity and oleophobicity and are known as easy to clean. However, it has been found that commercially available hard coats having omniophobic properties cannot withstand harsh chemical or physical stresses. Specifically, when omniophobic hard coats are subjected to harsh conditions such as chemical agents or weather (e.g., high temperature and/or high humidity), impaired functional surface properties are observed.

This may be however problematic for specific applications such as easy to clean hard coats that are often or permanently subjected to harsh conditions. For example, hard coats in automotive sensor or display applications need to meet specific standards regarding e.g. omniphobicity (i.e. both hydrophobicity and oleophobicity), cleaning property and scratch resistance and need to exhibit high durability even under harsh conditions.

Hence, there is a need of a composition, preferably a UV-curable composition, which allows the formation of a hard coat having excellent surface properties in terms of durable surface functionality and in particular omniophobicity that can be maintained over a long period of time even if the hard coat is exposed to harsh conditions.

### Summary of the Invention

In view of the above, it is an object of the invention to provide a UV-curable composition which allows the formation of a hard coat on a surface by curing, which hard coat exhibits highly durable surface functionality and specifically has omniphobic properties, including water repellency and oil repellency, and thus is easy-to-clean even when being subjected to harsh conditions such as chemical agents, high temperature and/or high humidity, while general properties such as visual appearance, high adhesion to the coated substrate and hardness (scratch resistance) are equally maintained.

The present invention addresses all the requirements described above, fulfilling them by using a specific combination of components for a UV-curable composition from which a hard coat can be formed which has not been considered in the field of coatings before. In this way, the present invention has been completed.

Namely, the UV-curable composition comprises a combination of

(a) 75-95 wt% of a (meth)acrylate-based curable resin composition, comprising

(i) 40-60 wt%, based on the total amount of (a), of one or more acrylate ester with 3 or more acrylate groups; and
(ii) 40-60 wt%, based on the total amount of (a), of (meth)acrylate-based urethane or (meth)acrylate acid-based ester or (meth)acrylate-based epoxy or (meth)acrylate-based silicone oligomers; and

(b) 5-25 wt% of a mixture of

(i) 0.5-50.0 wt%, based on the total amount of (b), of a compound having a perfluoropolyether (PFPE) group

and a curable moiety; and

(ii) 50.0-99.5 wt%, based on the total amount of (b), of at least one di(meth)acrylate monomer which is represented by the formula

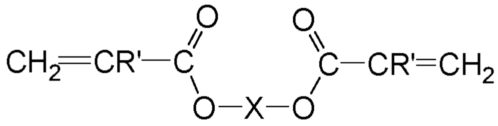

wherein

R' each independently is H, methyl or halogen, and

X is linear C2-16-alkyl, $(CH_2)_n$-$C_{3-16}$-cycloalkyl-$(CH_2)_m$, wherein n and m are independently an integer of 1-18, or linear (poly)alkyleneoxide having a methylene group on both terminal ends;

wherein (a) does not contain F-based compounds and the amounts of (a) and (b) sum up to ≥ 80 wt% of the total non-volatile matter in the composition.

The present invention also provides a hard coat which is obtainable by curing the UV-curable composition with UV light. In addition, the present invention relates to a surface-treated article which comprises a substrate and the hard coat of the invention on one or more surfaces thereof, as well as a process for producing such article.

Preferred embodiments of the invention are as defined in the appended dependent claims and/or in the following detailed description.

**UV-curable composition**

The UV-curable composition in accordance with the present invention comprises

(a) 75-95 wt% of a (meth)acrylate-based curable resin composition, comprising

(i) 40-60 wt%, based on the total amount of (a), of one or more acrylate ester with 3 or more acrylate groups, and

(ii) 40-60 wt%, based on the total amount of (a), of (meth)acrylate-based urethane or (meth)acrylate acid-based ester or (meth)acrylate-based epoxy or (meth)acrylate-based silicone oligomers, and

(b) 5-25 wt% of a mixture of

(i) 0.5-50.0 wt%, based on the total amount of (b), of a compound having a perfluoropolyether group and a curable moiety, and

(ii) 50.0-99.5 wt%, based on the total amount of (b), of at least one di(meth)acrylate monomer which is represented by the formula

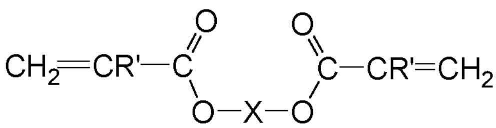

wherein

R' each independently is H, methyl or halogen, and

X is linear $C_{2-16}$-alkyl, $(CH_2)_n$-$C_{3-16}$-cycloalkyl-$(CH_2)_m$, wherein n and m are independently an integer of 1-18, or linear (poly)alkyleneoxide having a methylene group on both terminal ends;

wherein (a) does not contain F-based compounds and the amounts of (a) and (b) sum up to ≥ 80 wt% of the total non-volatile matter in the composition.

The non-volatile matter (sometimes abbreviated hereinafter as "NV") is determined by thermal gravimetry.

<u>(Meth)acrylate-based curable resin composition (a)</u>

The (meth)acrylate-based curable resin composition (a) is present in the UV-curable composition in an amount

of 75-95 wt%, based on the total non-volatile matter in the composition. Preferably, the (meth)acrylate-based curable resin composition (a) is present in the UV-curable composition in an amount of 80-90 wt%, based on the non-volatile matter of the UV-curable composition.

The (meth)acrylate-based curable resin composition (a) comprises (i) one or more acrylate ester with 3 or more acrylate groups. The (i) one or more acrylate ester is present in an amount of 40-60 wt%, based on the total amount of the (meth)acrylate-based curable resin composition (a).

In a preferred embodiment, the acrylate esters are one or more selected from pentaerythritol triacrylate (PET3A), pentaerythritol tetraacrylate (PET4a), dipentaerythritol pentaacrylate (DPPA), dipentaerythritol hexaacrylate (DPHA), tripentaerythritol heptaacrylate (TP7A), tripentaerythritol octaacrylate (TPOA) and trimethylolpropane triacrylate (TMPTA).

For example, in one embodiment, the acrylate ester present in the (meth)acrylate-based curable resin composition (a) may comprise a combination of PET4A and TMPTA. In another exemplary embodiment, the acrylate ester present in the (meth)acrylate-based curable resin composition (a) may comprise a combination of PET3A, PET4A and TPMTA. In a further exemplary embodiment, the acrylate ester present in the (meth)acrylate-based curable resin composition (a) may comprise a combination of PET3A, PET4A, DPPA, DPHA, TPOA and TP7A. However, any suitable combination of esters may be comprised in the (meth)acrylate-based curable resin composition (a).

In addition, the (meth)acrylate-based curable resin composition (a) comprises (ii) at least one of (meth)acrylate-based urethane, (meth)acrylate acid-based ester, (meth)acrylate-based epoxy and (meth)acrylate-based silicone oligomers in an amount of 40-60 wt%, based on the total amount of the (meth)acrylate-based curable resin composition (a). Preferably, the oligomer is at least one of a (meth)acrylate-based urethane oligomer, a (meth)acrylate acid-based ester oligomer and a (meth)acrylate-based epoxy oligomer.

The (meth)acrylate-based curable resin composition (a) may further comprise one or more polymerizable monomers. Examples of the polymerizable monomers include alkyl vinyl ether, acryloyl group-containing monomers and (meth)acrylate monomers having one or two acrylate groups.

Examples for the alkyl vinyl ether include cyclohexylmethyl vinyl ether, isobutyl vinyl ether, cyclohexyl vinyl ether, and ethyl vinyl ether, glycidyl vinyl ether, vinyl acetate and vinyl pivalate.

An example for the acryloyl group-containing monomer is (meth)acryloylmorpholine, such as 4-acryloylmorpholine.

Examples of the (meth)acrylate monomers include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, 3-methyl butyl (meth)acrylate, n-hexyl (meth)acrylate, 2-ethyl-n-hexyl (meth)acrylate, n-octyl (meth)acrylate, cyclohexyl (meth)acrylate, isobornyl (meth)acrylate, benzyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 4-hydroxy-cyclohexyl (meth)acrylate, phenoxyethyl (meth)acrylate, stearyl (meth)acrylate, lauryl (meth)acrylate, 2-ethylhexyl (meth)acrylate, allyl (meth)acrylate, ethoxyethyl (meth)acrylate, methoxyethyl (meth)acrylate, glycidyl (meth)acrylate, tetrahydrofurfuryl (meth)acrylate, neopentyl glycol mono(meth)acrylate, neopentyl glycol di(meth)acrylate, N,N-dimethylaminoethyl (meth)acrylate, N,N-diethylaminoethyl acrylate, (1,1-dimethyl-3-oxobutyl)(meth)acrylate, 2-acetoacetoxyethyl (meth)acrylate, 2-methoxyethyl (meth)acrylate, 2-ethoxyethyl (meth)acrylate, neopentyl glycol mono (meth)acrylate, glycerol mono (meth)acrylate, as well as urethane (meth)acrylate, epoxy(meth)acrylate, polyester (meth)acrylate, silicon (meth)acrylate, and an alkoxysilane group-containing (meth)acrylate monomer.

Specific examples of urethane (meth)acrylates include poly[(meth)acryloyloxyalkyl]isocyanurate represented by, for example, tris(2-hydroxyethyl)isocyanurate-diacrylate.

Epoxy (meth)acrylate is one obtained by adding a (meth)acryloyl group(s) to an epoxy group(s), and common ones are those obtained by using bisphenol A, bisphenol F, phenol novolac, or an alicyclic compound as a starting material.

Examples of polyhydric alcohol constituting a polyester unit of polyester (meth)acrylate include 1,4-butanediol, 1,6-hexanediol, trimethylolpropane, pentaerythritol, and dipentaerythritol, and examples of polybasic acid include phthalic acid, adipic acid, maleic acid, trimellitic acid, itaconic acid, succinic acid, terephthalic acid, and alkenyl succinic acid.

Silicon (meth)acrylate is dimethyl polysiloxane having a molecular weight of 1,000 to 10,000 and being modified with a (meth)acryloyl group(s) at its one or both terminals, and examples thereof include the following compounds:

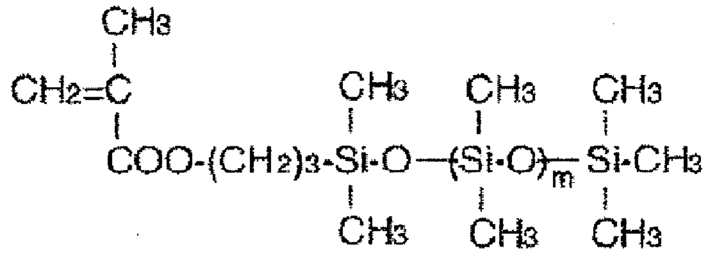

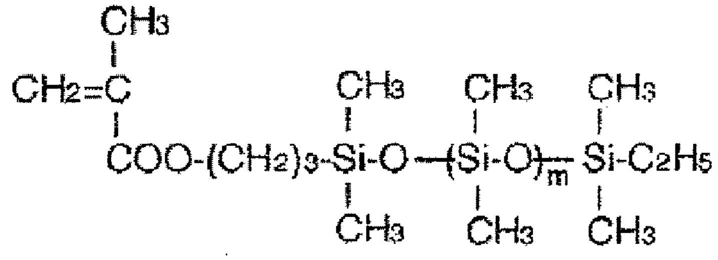

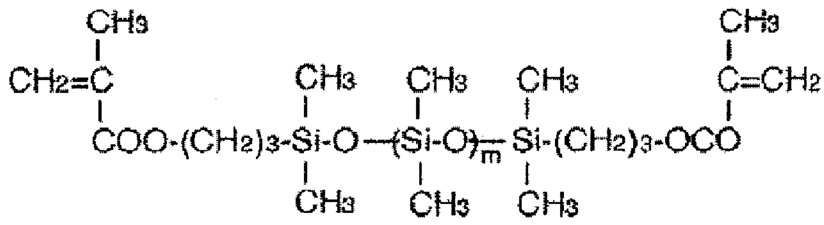

Examples of alkoxysilane group-containing (meth)acrylate monomers include 3-(meth)acryloyloxypropyl trichlorosilane, 3-(meth)acryloyloxypropyl trimethoxysilane, 3-(meth)acryloyloxypropyl triethoxysilane, 3-(meth)acryloyloxypropyl triisopropoxysilane, (also referred to as (triisopropoxysilyl) propyl methacrylate (abbreviation: TISMA) and (triisopropoxysilyl) propyl acrylate), 3-(meth)acryloxyisobutyl trichlorosilane, 3-(meth)acryloxyisobutyl triethoxysilane and 3-(meth)acryloxyisobutyl triisopropoxy 3-(meth)acryloxyisobutyl trimethoxysisilane.

In a preferred embodiment the curable (meth)acrylate-based resin composition (a) is a urethane (meth)acrylate-based resin composition. For example, the curable resin composition (a) comprises one or more of the above-mentioned acrylate esters (a)(i) and further comprises (meth)acrylate-based urethane oligomers, as well as optionally polymers and oligomers which are derived from the acrylate monomers. The resin composition may comprise further components such as polysiloxane urethane acrylate oligomers.

Commercially available resin compositions which can be used as the (meth)acrylate-based curable resin composition (a) in the present invention include UV525 PGM and UV525 M (available from Showa Denko Materials Co., Ltd., Japan), SILFORT* UVHC7400 (available from Momentive Performance Materials GmbH, Germany) and Beamset502H, 504H, 505A-6, 550B, 575CB, 577, and 1402 (available from Arakawa Chemical Industries, Ltd.), Ebecryl 40(available from Daicel Cytec Co., Ltd.), and HR300 series (available from The Yokohama Rubber Co., Ltd.).

The (meth)acrylate-based curable resin composition (a) of the present invention does not contain F-based compounds. In the sense of the present invention, this means that no fluorine-based ("F-based") compounds are contained.

<u>Mixture of a compound having a perfluoropolyether group and a curable moiety, and a di(meth)acrylate monomer (b)</u>

The UV-curable composition of the present invention comprises in addition to (a) the (meth)acrylate-based curable resin a mixture (b) of (i) a compound having a perfluoropolyether (PFPE) group and a curable moiety, and (ii) a specific di(meth)acrylate monomer.

This mixture (b) is present in the UV-curable composition in an amount of 5-25 wt%, based on the total non-volatile matter in the composition. Preferably, the mixture (b) is present in the UV-curable composition in an amount of 10-20 wt%, based on the total non-volatile matter in the composition.

Compound having a perfluoropolyether group and a curable moiety (b)(i)

The compound having a perfluoropolyether (PFPE) group and a curable moiety (b)(i) is not particularly limited.

Yet, preferably, the curable moiety is a C=C double bond. For example, the curable moiety includes but is not limited to an allyl group, a cinnamic acid group, a sorbic acid group, a substituted or unsubstituted acryloyl group and a (meth)acryloyl group. For example, the substituted or unsubstituted (meth)acryloyl group may be represented by the formula $CH_2=CX_1-C(O)-$, wherein $X_1$ represents a hydrogen atom, a chlorine atom, a fluorine atom, or a $C_{1-10}$ alkyl group which may be optionally substituted by fluorine.

The perfluoropolyether group is for example represented by the following formula:

$$-(OC_6F_{12})_s-(OC_5F_{10})_t-(OC_4F_8)_a-(OC_3F_6)_b-(OC_2F_4)_c-(OCF_2)_d-.$$

Wherein, in the formula, s, t, a, b, c, and d are each independently an integer of 0 or more and 200 or less, and the sum of s, t, a, b, c, and d is at least 1. Preferably, s, t, a, b, c, and d are each independently an integer of 0 or more and 100 or less. Preferably, the sum of s, t, a, b, c, and d is 5 or more, more preferably 10 or more. Preferably, the sum of s, t, a, b, c, and d is 200 or less, more preferably 100 or less, for example, 10 or more and 200 or less, more specifically 10 or more and 100 or less. The order of occurrence of the respective repeating units in parentheses with the subscript s, t, a, b, c, or d is not limited in the formula.

These repeating units may be straight or branched, but are preferably straight. Examples of the $-(OC_6F_{12})-$ group include $-(OCF_2CF_2CF_2CF_2CF_2CF_2)-$, $-(OCF(CF_3)CF_2CF_2CF_2CF_2)-$, $-(OCF_2CF(CF_3)CF_2CF_2CF_2)-$, $-(OCF_2CF_2CF(CF_3)CF_2CF_2)-$, $-(OCF_2CF_2CF_2CF(CF_3)CF_2)$ - and $-(OCF_2CF_2CF_2CF_2CF(CF_3))-$, preferably $-(OCF_2CF_2CF_2CF_2CF_2CF_2)-$. Examples of the $-(OC_5F_{10})-$ group include $-(OCF_2CF_2CF_2CF_2CF_2)-$, $-(OCF(CF_3)CF_2CF_2CF_2)-$, $-(OCF_2CF(CF_3)CF_2CF_2)-$, $-(OCF_2CF_2CF(CF_3)CF_2)$ - and $-(OCF_2CF_2CF_2CF(CF_3))-$, preferably-$(OCF_2CF_2CF_2CF_2CF_2)-$. The $-(OC_4F_8)-$ group may be any of- $(OCF_2CF_2CF_2CF_2)-$, $-(OCF(CF_3)CF_2CF_2)-$, $-(OCF_2CF(CF_3)CF_2)$ -, $-(OCF_2CF_2CF(CF_3))-$, $-(OC(CF_3)_2CF_2)-$, $-(OCF_2C(CF_3)_2)-$, $-(OCF(CF_3)CF(CF_3))-$, $-(OCF(C_2F_5)CF_2)$ -, and $-(OCF_2CF(C_2F_5))-$, but is preferably $-(OCF_2CF_2CF_2CF_2)-$. The $-(OC_3F_6)-$ group may be, for example, any of $-(OCF_2CF_2CF_2)-$, $-(OCF(CF_3)CF_2)$ -, and- $(OCF_2CF(CF_3))-$, preferably $-(OCF_2CF_2CF_2)-$. The $-(OC_2F_4)-$ group may be any of $-(OCF_2CF_2)-$ and $-(OCF(CF_3))-$, but is preferably $-(OCF_2CF_2)-$.

In a preferred embodiment, the compound having a PFPE group and a curable moiety (b)(i) comprises an isocyanate or an isocyanurate structure.

In particular, in one embodiment, the compound (b)(i) is a compound of formula (1):

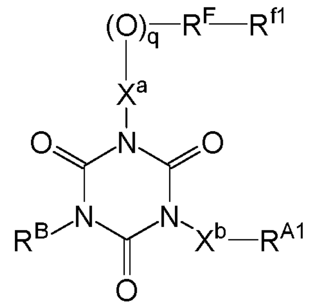

wherein $R^{f1}$ is $C_{1-16}$ alkyl optionally substituted by F; $R^F$ is a divalent perfluoropolyether group; q is 0 or 1; $X^a$ is a single bond or a divalent organic group; $R^{A1}$ is an $OR^{Ac}$ containing group; $R^{Ac}$ is a (meth)acrylate group; $X^b$ is a divalent organic group containing at least two hetero atoms; and $R^B$ is $R^{f1}-X^a-$ or $R^{A1}-X^b-$.

In a preferred embodiment, $R^{f1}$ is substituted by F, and may be linear or branched $C_{1-6}$ alkyl, preferably $C_{1-2}$ alkyl. More preferably, $R^{f1}$ is linear $C_{1-6}$ alkyl, and even more preferable $C_{1-3}$ alkyl.

$R^F$ is a divalent perfluoropolyether group which has the same definition as described above. For example, in one embodiment, $R^F$ may be represented by one of the following structures (f1), (f2), (f3), (f4) or (f5) :

$$-(OC_3F_6)_d- \qquad (f1)$$

wherein, in formula (f1), d is an integer from 1-200;

$$-(OC_4F_8)_c-(OC_3F_6)_d-(OC_2F_4)_e-(OCF_2)_f- \qquad (f2)$$

wherein, in formula (f2), c and d are independently integers from 0-30, e and f are independently integers from 1-200,

the sum of c, d, e and f is an integer from 10-200; and the order of occurrence of the repeating units in parentheses with the subscripts c, d, e or f in parentheses is arbitrary;

$$-(R^6-R^7)_g- \qquad (f3)$$

wherein, in formula (f3), $R^6$ is $OCF_2$ or $OC_2F_4$; $R^7$ is a group selected from $OC_2F_4$, $OC_3F_6$, $OC_4F_8$, $OC_5F_{10}$ and $OC_6F_{12}$ or combination selected from these groups, and g is an integer from 2-100;

$$-(OC_6F_{12})_a-(OC_5F_{10})_b-(OC_4F_8)_c-(OC_3F_6)_d-(OC_2F_4)_e-(OCF_2)_f- \qquad (f4)$$

wherein, in formula (f4), e is an integer of 1-200 and a, b, c, d and f are independently integers of 0-200, the sum of a, b, c, d, e and f is at least 1, and the order of occurrence of the repeating units in parentheses with the subscript a, b, c, d, e or f is arbitrary in the equation;

$$-(OC_6F_{12})_a-(OC_5F_{10})_b-(OC_4F_8)_c-(OC_3F_6)_d-(OC_2F_4)_e-(OCF_2)_f- \qquad (f5)$$

wherein, in formula (f5), f is an integer of 1-200 and a, b, c, d and e are independently an integer of 0 or more and 200 or less, and a, b, c, d and e, and the sum of a, b, c, d, e and f is at least 1, and the order of occurrence of the repeating units in parentheses with the subscript a, b, c, d, e or f is arbitrary.

In a preferred embodiment, $X^a$ is a divalent organic group which is represented by $-(CX^{121}X^{122})_{x1}-(X^{a1})_{y1}-(CX^{123}X^{124})_{z1}-$, wherein $X^{121}$ to $X^{124}$ are independently H, F, OH or $-OSi(OR^{121})_3$ (wherein each $R^{121}$ is independently a $C_{1-4}$ alkyl group) and $X^{a1}$ is -C(=O)NH-, -NHC(=O)-, -O-, -C(=O)O-, - OC(=O)-, -OC(=O)O- or -NHC(=O)NH-, x1 is an integer of 0-10, y1 is 0 or 1 and z1 is 1-10. More preferably, $X^1$ is a group represented by $-(CH_2)_{m22}-$, wherein m22 is an integer of 1-3.

In a preferred embodiment, $R^{A1}$ is $-R^{A6}-R^{A4}-OR^{AC}$ or $-R^{A6}-R^{A5}-(OR^{AC})_2$, wherein $R^{A4}$ is a $C_{1-10}$ alkylene group and preferably $C_{2-6}$ alkylene, more preferably $C_{2-4}$ alkylene, $R_{A5}$ is a trivalent $C_{1-10}$ hydrocarbon group and preferably a trivalent $C_{4-6}$ hydrocarbon group, $R^{A6}$ is a single bond or $-C_{1-10}$-alkylene-O- and more preferably a single bond, and $R^{Ac}$ is defined as above.

In a preferred embodiment, $X^b$ is represented by $-X^c-X^d-$, wherein $X^c$ is a divalent organic group containing a heteroatom and $X^d$ is $-CO-NR^{d2}-$, $-OCO-NR^{d2}-$, $-NR^{d2}-CO-$ or $-NR^{d2}COO-$ and is more preferably $-CO-NR^{d2}-$, wherein $R^{d2}$ is a hydrogen or a $C_{1-6}$ alkyl group.

In another preferred embodiment, the compound having a PFPE group and a curable moiety (b)(i) has an isocyanat structure. In this embodiment, the compound (b)(i) is preferably obtainable by reacting (A) a triisocyanate prepared by trimerizing a diisocyanate and (B) a combination of at least two active hydrogen-containing compounds, which combination comprises (B-1) at least one perfluoropolyether having an active hydrogen and (B-2) at least one monomer having an active hydrogen and a carbon-carbon double bond. The reaction of the triisocyanate (A) with the component (B) gives a perfluoropolyether-containing compound having at least one carbon-carbon double bond.

In the present invention, "an active hydrogen" refers to a hydrogen atom which is attached to a more electronegative atom, such as for example a hydrogen of a hydroxyl group.

The triisocyanate (A) may be a triisocyanate which is prepared by trimerizing a diisocyanate. Examples of the diisocyanate for preparing the triisocyanate (A) include diisocyanates having aliphatically bonded isocyanate groups, for example, hexamethylene diisocyanate, isophorone diisocyanate, xylylene diisocyanate, hydrogenated xylylene diisocyanate and dicyclohexylmethane diisocyanate; and diisocyanates having aromatically bonded isocyanate groups, for example, tolylene diisocyanate, diphenylmethane diisocyanate, polymethylenepolyphenyl polyisocyanate, tolidine diisocyanate and naphthalene diisocyanate.

In a preferred embodiment, (B-1) is of the general formula $CYF_2-[CF_2]_a-[O(CF_2)_3]_b-[O(CF_2)_2]_c-COC(CF_3)CF_2]_d-[OCF_2]_e-[O(CF_2)_2]_f-[O(CF_2)_3]_g-OCZF-(CF_2)_n-CH_2OH$, wherein Y and Z are F or $-CF_3$, a is an integer of 1-16, c is an integer of 0-5, b, d, e, f and g are independently an integer of 0-200 and h is an integer of 0-16.

The monomer (B-2) having an active hydrogen and carbon-carbon double bond is preferably a (meth)acrylate ester or vinyl monomer with an active hydrogen, particularly a hydroxyl group. Examples of the monomer (B-2) include: hydroxyethyl(meth)acrylate; aminoethyl(meth)acrylate; $HO(CH_2CH_2O)_i-COC(R)C=CH_2$, wherein R is H or $CH_3$ and i is an integer of 2-10; $CH_3CH(OH)CH_2OCOC(R)C=CH_2$, wherein R is H, $CH_3$ or 2-hydroxypropyl (meth)acrylate; $CH_3CH_2CH(OH)CH_2OCOC(R)C=CH_2$, wherein R is H, $CH_3$ or 2-hydroxybutyl (meth) acrylate; $C_6H_5OCH_2CH(OH)CH_2OCOC(R)C=CH_2$, wherein R is H, $CH_3$ or 2-hydroxy-3-phenoxypropyl (meth)acrylate; allyl alcohol; $HO(CH_2)_kCH=CH_2$, wherein k is 2-20; $(CH_3)_3SiCH(OH)CH=CH_2$ and styryl phenol.

The compound having a PFPE group and a curable moiety (b)(i) which has an isocyanate group is obtainable by commonly known methods, such as the method described in EP 1 411 073 A1.

In the UV-curable composition, the compound having a PFPE group and a curable moiety (b)(i) is present in an amount of 0.5-50.0 wt%, preferably 0.5-25.0 wt%, based on the total amount of (b). The compound having a PFPE group and a curable moiety (b)(i) is preferably present in an amount of 0.01-5 wt%, preferably 0.1-2 wt%, based on the total NV matter of the UV-curable composition.

Commercially available compounds having a PFPE group and a curable moiety which can be used as the compound having a PFPE group and a curable moiety (b)(i) in the present invention include, for example, OPTOOL DAC HP (available from Daikin Industries, Ltd.).

Di(meth)acrylate monomer (b)(ii)

The di(meth)acrylate monomer (b) (ii) may be a diacrylate monomer, a dimethacrylate monomer or an acrylate-methacrylate monomer.

The di(meth)acrylate monomer (b) (ii) is represented by the formula

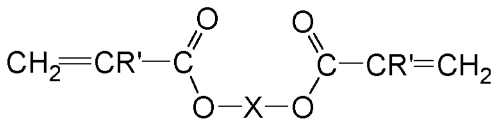

wherein R' each independently is H, methyl or halogen, and X is linear $C_{2-16}$-alkyl, $(CH_2)_n$-$C_{3-16}$-cycloalkyl-$(CH_2)_m$, wherein n and m are independently an integer of 1-18, or linear (poly)alkyleneoxide having a methylene group on both terminal ends.

The term "linear" in the sense of the present invention means that the chain connecting the (meth)acrylate is not branched and none of the carbon atoms present in the chain carries substituents other than hydrogen atoms.

For example, in one embodiment X may be ethylene ($CH_2CH_2$), n-propylene ($CH_2CH_2CH_2$), n-butylene ($CH_2CH_2CH_2CH_2$), n-pentylene ($CH_2CH_2CH_2CH_2CH_2$) or n-hexylene ($CH_2CH_2CH_2CH_2CH_2CH_2$). In another embodiment, X may be a (poly)alkyleneoxide group having a methylene group on both terminal ends. For example, the alkylene in the (poly)alkyleneoxide group may be ethylene or propylene.

Specific examples of the di(meth)acrylate monomer (b)(ii) represented by the above formula include 1,6-hexanediol diacrylate, 1,5-pentanediol diacrylate, 1,4-butanediol diacrylate, 1,3-propandiol diacrylate, 1,6-hexanediol dimethacrylate, 1,5-pentanediol dimethacrylate, 1,4-butanediol dimethacrylate, 1,3-propandiol dimethacrylate, ethylene glycol diacrylate, diethylene glycol diacrylate, triethylene glycol diacrylate, tetraethylene glycol diacrylate, poly(ethylene glycol) diacrylate, dipropylene glycol diacrylate, tripropylene glycol diacrylate, poly(propylene glycol) diacrylate, ethylene glycol dimethacrylate, diethylene glycol dimethacrylate, triethylene glycol dimethacrylate, tetraethylene glycol dimethacrylate, poly(ethylene glycol) dimethacrylate, dipropylene glycol dimethacrylate, tripropylene glycol dimethacrylate, poly(propylene glycol) dimethacrylate, tricyclodecane dimethanol diacrylate (for example, SR833 S available from Sartomer), (octahydro-4,7-methano-1H-indenediyl)bis(methylene) bismethacrylate (CAS No. 43048-08-04), but are not limited thereto.

Preferably, in the above formula, each R' is H and X is n-hexylene. That is, component (b) is 1,6-hexanediol diacrylate (HDDA) which corresponds to the formula $CH_2$=CH-C(=O)O-$(CH_2)_6$-OC(=O)CH=$CH_2$.

In the UV-curable composition, the di-(meth)acrylate monomer (b) (ii) is present in an amount of 50.0-99.5 wt%, preferably 75.0-99.5 wt%, based on the total amount of (b). The di-(meth)acrylate monomer (b) is preferably present in an amount of 1-20 wt%, more preferably 10-18 wt% and even more preferably 14-16 wt%, based on the total NV matter of the UV-curable composition.

The present UV-curable composition may contain further components which are commonly known to be useful additives in resin compositions, including but not limited to solvents, photopolymerization initiators, antioxidants, thickening agents, levelling agents, antifoams, antistatics, antifogging agents, ultraviolet absorbers, light stabilizers, pigments, dyes, inorganic fine particles such as silica, fillers such as aluminum paste, talc, glass frit, and metal powder, and polymerization inhibitors such as butylated hydroxytoluene (BHT) and phenothiazine (PTZ).

Preferably, the UV-curable composition of the invention may further include one or more agents, such as (c) an organic solvent, (d) a photo-polymerization initiator, (e) a UV-absorber (UVA), (f) a hindered amine light stabilizer (HALS), (g) a levelling agent, (h) an anti-foaming agent and (i) wetting agents.

The organic solvent (c) which may be present in the UV-curable composition is not particularly limited, but examples include non-fluorinated organic solvents and fluorinated organic solvents, including ketones, esters, amides, sulfoxides, ethers, hydrocarbons, and fluorine-based solvents, such as acetone, methyl ethyl ketone, methyl isobutyl ketone, cyclohexanone, ethyl acetate, butyl acetate, propylene glycol monomethyl ether acetate, dimethylformamide, dimethylacetamide, N-methylpyrrolidone, dimethyl sulfoxide, diethyl ether, diisopropyl ether, 1-methoxy-2-propanol, tetrahydrofuran, dioxane, toluene, xylene, 1,3-tetrahydrofuran, dioxane, toluene, xylene, 1,3-bis(trifluoromethyl)benzene

and 1,4-bis(trifluoromethyl)benzene. One of these organic solvents may be used alone or a combination of two or more organic solvents may be used. For example, the organic solvent includes 1-methoxy-2-propanol (also referred to as propylene glycol methyl ether, PGME) and/or 1,1,2,2,3,3,4-heptafluorocyclopentane.

The photo-polymerization initiator (d) which may be present in the UV-curable composition is not particularly limited as long as it functions as a catalyst initiating curing (cross-linking reaction) of a curable moiety (for example, a carbon-carbon double bond). The photo-polymerization initiator (d) in the UV-curable composition of the present invention can be appropriately selected depending on the components, a type or irradiation intensity of an active energy ray used (range of wavelength, etc.).

Specifically, examples of the initiator include acetophenones, such as acetophenone, chloroacetophenone, diethoxyacetophenone, hydroxyacetophenone, α-aminoacetophenone, hydroxypropiophenone and 2-methyl-1-[4-(methylthio)phenyl]-2-morpholinopropan-1-one; benzoins, such as benzoin, benzoin methyl ether, benzoin ethyl ether, benzoin isopropyl ether, benzoin isobutyl ether and benzyl dimethyl ketal; benzophenones, such as benzophenone, benzoyl benzoate, methyl benzoyl benzoate, 4-phenyl benzophenone, hydroxy benzophenone, hydroxy-propyl benzophenone, acrylated benzophenone and Michler's ketone; thioxanthones, such as thioxanthone, chlorothioxanthone, methylthioxanthone, diethylthioxanthone and dimethylthioxanthone; and others such as benzyl, α-acyloxime ester, acylphosphine oxide, glyoxy ester, 3-ketocoumarin, 2-ethylanthraquinone, camphorquinone and anthraquinone. The photo-polymerization initiators (d) may be used alone or may be used in combination of two or more and may be present in any suitable amount, for example in an amount of 2-5 wt% based on the total non-volatile matter of the UV-curable composition.

Commercially available photo-polymerization initiators such as Omnirad 184® (1-hydroxycyclohexyl-phenyl ketone) or Irgacure 819® (bis(2,4,6-trimethylbenzoyl) phenylphosphine oxide may be used, but the photo-polymerization initiators are not limited thereto.

The UV-curable composition may further optionally contain (e) a UV-absorber (UVA) and/or (f) a hindered amine light stabilizer (HALS). The UVA and the HALS are not particularly limited, but examples include Tinuvin 400, Tinuvin 405, Tinuvin 479, Tinuvin 152 and Tinuvin 292 (available from BASF), Hostavin 3400, Hostavin 3206 and Hostavin 3070 (available from Clariant), ADK SATB LA-82 and LA_87 (available from ADEKA Corporation), as well as Ruva-93 (available from Otsuka Chemical Co., Ltd.).

The UV-curable composition may further optionally contain (g) a levelling agent, such as TEGO RAD 2100, 2200N, 2250, TEGO flow 307 and TEGO GLine 432 (available from Evonik).

In addition, the UV-curable composition may also contain (h) an anti-foaming agent, such as TEGO Foamex N or TEGO® Airex 971 (available from Evonik), and/or (i) wetting agents, such as TEGO® Glide 432, TEGO® Dispers 652 and TEGO wet 270 (available from Evonik).

In the UV-curable composition of the present invention, the amount of non-volatile matter sums up to 20-50 wt%, preferably 30-45 wt%, more preferably 40 wt%, based on the total of the UV-curable composition.

**Hard coat**

The present invention further relates to a hard coat which is obtainable by curing the UV-curable composition of the invention with UV-light. Before curing, the volatile matter, including solvents, may be evaporated. The evaporation is preferably carried out in two steps. For example, the evaporation may be performed in a first step by flash evaporation at room temperature for 2-5 min, and a second step by thermal treatment at about 60-90 °C for 5-15 min.

The hard coat may be obtained by curing the UV-curable composition of the invention using UV-light. The curing energy may be suitably selected according to the formulation of the UV-curable composition and may be within the range of 500-10.000 $mJ/cm^2$, such as 1000 $mJ/cm^2$, 5000 $mJ/cm^2$ or 7000 $mJ/cm^2$. The curing is preferably performed under inert gas atmosphere. The inert gas may be preferably nitrogen ($N_2$).

The hard coat compositions of the present invention are preferably radiation-cured by using a Mercury lamp.

The hard coat of the invention preferably has a water contact angle (WCA) of > 103°, and/or a n-hexadecane contact angle of > 55°, and/or a diiodomethane contact angle of > 83° and/or a surface free energy of < 20 mN/m. In particular, a water contact angle of > 90° indicates that the surface of the hard coat has hydrophobic properties. In addition, a n-hexadecane contact angle of 60-80° indicates that the surface of the hard coat exhibits oleophobic properties.

**Surface-treated article**

The present invention further relates to a surface-treated article which comprises a substrate and the hard coat of the invention which is applied on one or more surfaces of the substrate.

The substrate on which surface the hard coat may be applied is not particularly limited. Examples of a substrate to be treated include plastic substrates, and preferably a plastic substrate selected from poly(methylmethacrylate) (PPMA), polycarbonate (PC), polyethylene terephthalate (PET) and triacetylcellulose (TAC).

A method for producing the surface-treated article comprises applying the UV-curable composition of the present invention on the surface of a substrate and curing the applied composition preferably under nitrogen atmosphere. The UV-curable composition may be applied to the substrate by common coating methods such as spray coating, roll-to-roll coating, flow coating, dip coating, spin coating, Gravure coating, micro gravure coating, die coating and screen printing.

## Examples

In the following, examples in accordance with the invention and comparative examples are explained in detail.

Preparation of the UV-curable compositions:

The exemplary UV-curable compositions were prepared as follows:

(1) Mixing the (meth)acrylate-based curable resin composition (a) with the diacrylate monomer (b)(ii);
(2) Dilute (or disperse) other additives (if any) in an organic solvent;
(3) Dissolve a photo initiator in an organic solvent;
(4) Dilute the compound having a PFPE group and a curable moiety (b)(i) in organic solvent;
(5) Mixing all solutions of steps 1-4 under stirring.

For Examples 1-3, the following components were used:

(a) (meth)acrylate-based curable resin composition: UV525 PGM (available from Showa Denko Materials Co., Ltd., Japan) (b)(i) compound having a PFPE group and a curable moiety: DAC HP (Daikin Industries, Ltd.)
(b) (ii) di-(meth)acrylate monomer: 1,6-hexanediol
diacrylate (HDDA)(SR 238, available from Sartomer Arkema Group)
(c) solvent: 1-methoxy-2-propanol (PGME)
(d) photo-polymerization initiator: Irgacure 184 (Omnirad 184)

Determination of the NV content

The standard method is thermal gravimetry, by which a certain amount of the composition is heated up for a period of time to let the volatile matter such as solvents evaporate. Then the residue will be weighed again and the NV content is calculated as below:

$$NV\% = (\text{weight after thermal aging}) / (\text{initial weight}) * 100$$

As will be apparent to those skilled in the art, the temperature and time period depends on the boiling points of the solvents and monomers.

The ratio of the components mixed for Examples 1-3 is indicated in Table 1:

[Table 1]

| | **Composition Example 1** | | | **Composition Example 2** | | | **Composition Example 3** | | |
|---|---|---|---|---|---|---|---|---|---|
| | NV [%] | total [g] | solid [g] | NV [%] | total [g] | solid [g] | NV [%] | total [g] | solid [g] |
| UV525PGM | 70 | 10 | 7.00 | 70 | 10 | 7.00 | 70 | 10 | 7.00 |
| IR184 | 100 | 0.17 | 0.17 | 100 | 0.17 | 0.17 | 100 | 0.17 | 0.17 |
| HDDA | 100 | 0.5 | 0.50 | 100 | 1 | 1.00 | 100 | 1.4 | 1.40 |
| DAC HP | 20 | 0.4 | 0.08 | 20 | 0.5 | 0.10 | 20 | 0.5 | 0.10 |
| PGME | 0 | 7 | 0.00 | 0 | 8 | 0.00 | 0 | 9 | 0.00 |
| | | | | | | | | | |
| Total composition [g] | 18.07 | | | 19.67 | | | 21.07 | | |
| Total solid [g] | 7.75 | | | 8.27 | | | 8.67 | | |
| Total solid content [%] | 42.89 | | | 42.04 | | | 41.15 | | |

(continued)

| | Composition Example 1 | | | Composition Example 2 | | | Composition Example 3 | | |
|---|---|---|---|---|---|---|---|---|---|
| | NV [%] | total [g] | solid [g] | NV [%] | total [g] | solid [g] | NV [%] | total [g] | solid [g] |
| IR184 solid content [%] | 2.19 | | | 2.06 | | | 1.96 | | |
| HDDA solid content [%] | 6.45 | | | 12.09 | | | 16.15 | | |
| DAC-HP solid content [%] | 1.03 | | | 1.21 | | | 1.15 | | |

Preparation of the hard coat:

From the above Compositions Examples 1-3, hard coat Examples 1-3 were prepared on a surface of a substrate as followed:

(1) The substrate is cleaned for example by alcohol wiping followed by deionization by ionized air;
(2) The coating composition is filtered in a filtration step in order to remove insoluble components or any kind contamination such as dust particles, for example by filtration using a 0,2-5 μm PTFE filter;
(3) The coating composition is then applied on the substrate via a commonly known paint application method, such as flowing, spraying, dipping, bar coating or roll-to-roll;
(4) The solvent is then evaporated in two steps including 2-5 min flash off at room temperature, followed by 5-10 min thermal pre-treatment at 70-90°C.
(5) The coating is then exposed to UV-irradiation under inert atmosphere ($N_2$). The required curing energy depends on the formulation composition and may be within the range of 500-10.000 mJ/cm$^2$ as explained above. In Examples 1-3 and Comparative Examples 1 and 2, the curing energy was 1000 mJ/cm$^2$.

In addition, hard coats were prepared in the same manner as Examples 1-3 by only using component (a) (Comparative Example 1) and by only using component (a) and (b)(i) (Comparative Example 2), respectively.

Measurement of contact angle

For the obtained hard coats, the hydro- and oleophobicity of the hard coat was evaluated by measuring the contact angles using a contact angle meter (LSA200, manufactured by Lauda Scientific). In particular, the test liquids for measuring the contact angle were water, n-hexadecane and diiodomethane so as to obtain the water contact angle (WCA), the n-hexadecane angle and the diiodomethane contact angle. The contact angle measurements were carried out using 2 μL of test liquid. The values were measured for the cured hard coat subsequent to its preparation (initial contact angle), as well as after performance of several stress tests as outlined below.

Determination of surface free energy

The surface free energy (SFE) was calculated from the contact angles according to the method of Owens et al. described in J. Appl. Polym. Sci 13 (1969), pp. 1741-1747 ("OWRK method").

Evaluation of adhesion to the substrate

In addition, the adhesion of the hard coat was evaluated by cross-cut test. The adhesion level is rated based on ASTM D3359 classification, where 0B means the lowest adhesion and 5B means the perfect adhesion.

Evaluation of the hardness of the coating (scratch resistance)

The hardness of the hard coat (scratch resistance) was evaluated by an Erichsen hardness tester using 0,75 mm Bosch tip.

Evaluation of the chemical resistance of the coating

The chemical resistance of the hard coat was evaluated by two different tests:

- Resistance to cosmetics (suncream) according to VW-PV-3964
- Resistance to alkaline media according to BMW-PR-557

Evaluation of the durability of the coating

The durability of the hard coat was measured by the following tests:

- Condensation atmosphere with constant humidity as per DIN EN ISO 6270-2, test duration 240 h
- Hydrolysis aging: 72 h at (90 ±2) °C and (95 ±1)% relative humidity in the climatic chamber
- Environmental cycle test: 8 cycles as per test specification VW-PV-1200

The results obtained for Examples 1-3 and Comparative Example 1 and 2 are shown in Table 2 below. In the table, "o" indicates that the properties have improved, "-" indicates that the test was passed, and "x" indicate that the test was failed.

[Table 2]

| | | Example 1 | | Example 2 | | Example 3 | | Comparative Example 1 | | Comparative Example 2 | |
|---|---|---|---|---|---|---|---|---|---|---|---|
| amount component (b)(i)* | | 1% | | 1% | | 1% | | 0% | | 1% | |
| amount component (b)(ii)* | | 6% | | 12% | | 16% | | 0% | | 0% | |
| total amount of (b)* | | 7% | | 13% | | 17% | | 0% | | 1% | |
| curing | | Air | $N_2$ | Air | $N_2$ | Air | $N_2$ | Air | $N_2$ | Air | $N_2$ |
| initial contact angle | water (WCA) | 110-113 | | 110-113 | | 110-113 | | 40-55 | | 110-113 | |
| | n-hexadecane | 64-68 | | 64-68 | | 64-68 | | | | 64-68 | |
| | diiodomethane | 90-93 | | 90-93 | | 90-93 | | | | 90-93 | |
| | SFE (mN/m) | 12.3 | | 11.8 | | 12.7 | | | | 12.5 | |
| NaoH test | visual appearance | OK | OK | OK | OK | OK | OK | OK | OK | OK | OK |
| | WCA | <30 | 94 | <30 | 106 | <30 | 111 | <30 | <30 | <30 | 98 |
| | evaluation | x | o | x | - | x | - | x | x | x | o |
| Hydrolysis (72 h at 90°C and 95%RH) | adhesion | 0B | | 3B | | 5B | | 0B | | 0B | |
| | WCA | 111 | | 110 | | 108-112 | | <50 | | 105 | |
| | n-hexadecane | 67 | | 67 | | 68 | | | | 64 | |
| | evaluation | x | | o | | - | | x | | x | |
| water condensation (240 h at 40°C and 100%RH) | adhesion | | | | | 5B | | 1B | | 3B | 3B |
| | WCA | | | | | 108 | 112 | <50 | | 105 | 110 |
| | n-hexadecane | | | | | 62 | 67 | | | 59 | 64 |
| | evaluation | | | | | - | - | x | | x | x |
| thermal cycle (PV1200 8 cycles) | adhesion | | | | | 5B | | 0B | | 1B | 2B |
| | WCA | | | | | 112 | 113 | <50 | | 107 | 112 |
| | n-hexadecane | | | | | 65 | 66 | | | 60 | 64 |
| | evaluation | | | | | - | | x | | x | x |
| sun cream test (PV 3964, 80°C, 24 h, forced air ventilation oven) | visual appearance | | | | | OK | | delamination | | delamination | |
| | adhesion | | | | | 5B | | 0B | | 0B | |
| | evaluation | | | | | - | | x | | x | |

*based on the total NV matter of the composition.

As apparent from the data in Table 2, hard coats in accordance with the present invention exhibit excellent surface properties even after stress tests and thus are considered to have both high functionality and high durability. In addition, the visual appearance of the hard coat is not impaired after exposure to alkaline media as shown in the NaOH resistance test, as well as in the sun cream resistance test.

In particular, even after performing the NaOH resistance test and the hydrolysis test, Examples 1-3 all show

water contact angles of > 90° which shows that the hard coat's hydrophobic properties are not impaired after the hard coat is subjected to harsh conditions. Examples 2 and 3 both additionally showed good to excellent adhesion after the hydrolysis test.

Surprisingly, both the visual appearance of Example 3, as well as the functional properties including adhesion to the substrate and hydrophobicity, as well as oleophobicity were excellent after every resistance test conducted. The properties were even further improved when the coat was cured under nitrogen atmosphere.

By contrast, Comparative Example 1 which does not contain components (b) (i) and (b)(ii), as well as Comparative Example 2 which does not contain component (b)(ii) both showed reduced hydrophobicity after the NaOH resistance test, as well as reduced adhesion after hydrolysis. Comparative Example 2 further did not withstand the sun cream test and the hard coat showed significant delamination, thereby impairing both functional and visual property thereof.

In addition, hard coats of Examples 4 and 5 have been prepared in the same manner as Examples 1-3 above in which poly(ethylene glycol) diacrylate (PEGDA) was used as component (b)(ii). The evaluation of the water contact angles of the hard coats of Examples 4 and 5 before and after the NaOH resistance test and the hydrolysis test was the same as outlined above for Examples 1-3 and Comparative Examples 1 and 2. The compositions and results for Examples 4 and 5 are shown in Table 3 below.

[Table 3]

| | **Example 4** | **Example 5** |
|---|---|---|
| **component (b)(i)*** | DAC-HP 1% NV | DAC-HP 1% NV |
| **component (b)(ii)*** | PEGDA 1% NV | PEGDA 5% NV |
| **total amount of (b)*** | 2% NV | 6% NV |
| **component (c)** | IR184 2% NV | IR184 2% NV |
| **Curing conditions** | $N_2$/1000 mJ/cm2 | $N_2$/1000 mJ/cm2 |
| **Initial WCA** | 111 | 113 |
| **Initial Adhesion** | 5B | 5B |
| **WCA after NaOH test** | 104 | 110 |
| **WCA after hydrolysis** | 112 | 112 |
| *based on the total NV matter of the composition. | | |

As apparent from the above results, Examples 4 and 5 both show water contact angles of > 90° after the NaOH resistance test and the hydrolysis test. This shows that the hydrophobic properties of the hard coats are not impaired after they are subjected to harsh conditions, thereby indicating that the functional surface properties of the hard coat are durable.

## Claims

**1.** A UV-curable composition, comprising:

(a) 75-95 wt% of a (meth)acrylate-based curable resin composition, comprising

(i) 40-60 wt%, based on the total amount of (a), of one or more acrylate ester with 3 or more acrylate groups; and
(ii) 40-60 wt%, based on the total amount of (a), of at least one of (meth)acrylate-based urethane, (meth)acrylate acid-based ester, (meth)acrylate-based epoxy and (meth)acrylate-based silicone oligomers;

(b) 5-25 wt% of a mixture of

(i) 0.5-50.0 wt%, based on the total amount of (b), of a compound having a perfluoropolyether (PFPE) group and a curable moiety; and
(ii) 50.0-99.5 wt%, based on the total amount of (b), of at least one di(meth)acrylate monomer which is represented by the formula

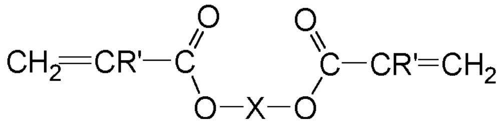

wherein

R' each independently is H, methyl or halogen, and
X is linear $C_{2-16}$-alkyl, $(CH_2)_n$-$C_{3-16}$-cycloalkyl-$(CH_2)_m$, wherein n and m are independently an integer of 1-18, or linear (poly)alkyleneoxide having a methylene group on both terminal ends;

wherein (a) does not contain F-based compounds and the amounts of (a) and (b) sum up to ≥ 80 wt% of the total non-volatile matter in the composition.

**2.** The composition of claim 1 which further comprises one or more organic solvents, photo-polymerization initiators, UV-absorbers (UVA), hindered amine light stabilizers (HALS), levelling agents, anti-foaming agents and wetting agents.

**3.** The composition of claim 1 or 2 in which the non-volatile matter sums up to 20-50 wt%, based on the total of the composition.

**4.** The composition of any of claims 1-3, wherein (b)(i) comprises an isocyanate or an isocyanurate structure.

**5.** The composition of any of claims 1-4, wherein (b)(i) is a compound of formula (1):

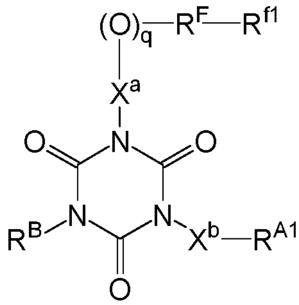

wherein

$R^{f1}$ is $C_{1-16}$-alkyl optionally substituted by F;
$R^F$ is a divalent perfluoropolyether group;
*q* is 0 or 1;
$X^a$ is a single bond or a divalent organic group;
$R^{A1}$ is an $OR^{Ac}$ containing group;
$R^{Ac}$ is a (meth)acrylate group;
$X^b$ is a divalent organic group containing at least two hetero atoms; and
$R^B$ is $R^{f1}$-$X^a$- or $R^{A1}$-$X^b$-.

**6.** The composition of any of claims 1-4, wherein (b)(i) is obtainable by reacting

(A) a triisocyanate prepared by trimerizing a diisocyanate, and
(B) a combination of at least two active hydrogen-containing compounds, which combination comprises:

(B-1) at least one perfluoropolyether having an active hydrogen, and
(B-2) at least one monomer having an active hydrogen and a carbon-carbon double bond.

**7.** The composition of any of claims 1-6, wherein (a)(i) is one or more selected from pentaerythritol triacrylate (PET3A), pentaerythritol tetraacrylate (PET4a), dipentaerythritol pentaacrylate (DPPA), dipentaerythritol hexaacrylate (DPHA), tripentaerythritol heptaacrylate (TP7A), tripentaerythritol octaacrylate (TPOA) and trimethylolpropane triacrylate (TMPTA).

8. The composition of claims 1-7, wherein, in (b)(ii), each R' is H and X is n-hexylene.

9. A hard coat which is obtainable by curing the UV-curable composition of any of claims 1-8 with UV-light.

10. The hard coat of claim 9, wherein the curing is performed under inert gas atmosphere, preferably under nitrogen atmosphere.

11. The hard coat of claim 9 or 10, which has

(i) a water contact angle of > 103°, and/or
(ii) a n-hexadecane contact angle of > 55°, and/or
(iii) a diiodomethane contact angle of > 83° and
(iv) optionally a surface free energy of < 20 mN/ m, wherein the contact angles and the surface free energy are determined according to the methods mentioned in the specification.

12. A surface-treated article which comprises a substrate and the hard coat of any of claims 9-11 on one or more surfaces of the substrate.

13. The surface-treated article of claim 12, wherein the substrate is a plastic substrate, and preferably a plastic substrate selected from poly(methylmethacrylate) (PPMA), polycarbonate (PC), polyethylene terephthalate (PET) and triacetylcellulose (TAC).

14. A process for producing the surface-treated article of claim 12 or 13, comprising applying the composition of any of claims 1-8 on the surface of a substrate and curing the applied composition preferably under nitrogen atmosphere.

## Patentansprüche

1. UV-härtbare Zusammensetzung, umfassend:

(a) 75-95 Gew.-% einer (Meth)acrylat-basierten härtbaren Harzzusammensetzung, umfassend

(i) 40-60 Gew.-%, bezogen auf die Gesamtmenge von (a), eines oder mehrerer Acrylatester mit 3 oder mehr Acrylatgruppen und
(ii) 40-60 Gew.-%, bezogen auf die Gesamtmenge von (a), von mindestens einem von (Meth)acrylat-basierten Urethan-, (Meth)acrylatsäure-basierten Ester-, (Meth)acrylat-basierten Epoxy- und (Meth)acrylat-basierten Silikon-Oligomeren,

(b) 5-25 Gew.-% einer Mischung aus

(i) 0,5-50,0 Gew.-%, bezogen auf die Gesamtmenge von (b), einer Verbindung mit einer Perfluorpolyether (PFPE)-Gruppe und einem härtbaren Rest und
(ii) 50,0-99,5 Gew.-%, bezogen auf die Gesamtmenge von (b), von mindestens einem Di(meth)acrylatmonomer, das durch die Formel

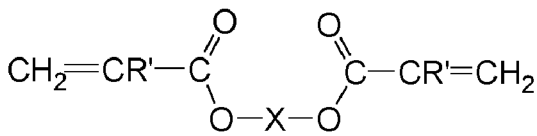

dargestellt ist, worin
R' jeweils unabhängig H, Methyl oder Halogen ist und
X lineares $C_{2-16}$-Alkyl, $(CH_2)_n$-$C_{3-16}$-Cycloalkyl-$(CH_2)_m$ ist, worin n und m unabhängig eine ganze Zahl von 1-18 sind, oder lineares (Poly)alkylenoxid mit einer Methylengruppe an beiden terminalen Enden ist,

wobei (a) keine F-basierten Verbindungen enthält und sich die Mengen an (a) und (b) zu ≥ 80 Gew.-% der gesamten nichtflüchtigen Bestandteile in der Zusammensetzung summieren.

**2.** Zusammensetzung nach Anspruch 1, die ferner ein/einen oder mehr organische Lösungsmittel, Photopolymerisationsinitiatoren, UV-Absorber (UVA), gehinderte Amin-Lichtstabilisatoren (HALS), Verlaufmittel, Entschäumer und Benetzungsmittel umfasst.

**3.** Zusammensetzung nach Anspruch 1 oder 2, in der sich die nichtflüchtigen Bestandteile zu 20-50 Gew.-%, bezogen auf die gesamte Zusammensetzung, summieren.

**4.** Zusammensetzung nach einem der Ansprüche 1-3, wobei (b)(i) eine Isocyanat- oder eine Isocyanurat-Struktur umfasst.

**5.** Zusammensetzung nach einem der Ansprüche 1-4, wobei (b)(i) eine Verbindung der Formel (1) ist:

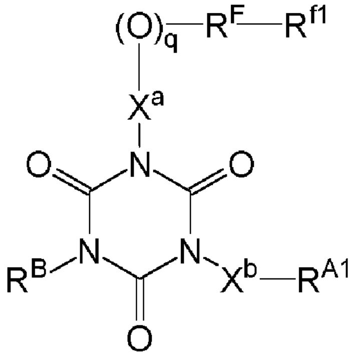

worin

$R^{f1}$ $C_{1-16}$-Alkyl, optional substituiert durch F, ist,
$R^F$ eine divalente Perfluorpolyethergruppe ist,
q 0 oder 1 ist,
$X^a$ eine Einfachbindung oder eine divalente organische Gruppe ist,
$R^{A1}$ eine $OR^{Ac}$ enthaltende Gruppe ist,
$R^{Ac}$ eine (Meth)acrylatgruppe ist,
$X^b$ eine divalente organische Gruppe ist, die mindestens zwei Heteroatome enthält,und
$R^B$ $R^{f1}$-$x^a$- oder $R^{A1}$-$X^b$- ist.

**6.** Zusammensetzung nach einem der Ansprüche 1-4, wobei (b)(i) durch Reagieren von

(A) einem durch Trimerisieren eines Diisocyanats hergestellten Triisocyanats und
(B) einer Kombination aus mindestens zwei aktiven Wasserstoff enthaltenden Verbindungen erhältlich ist, wobei die Kombination umfasst:

(B-1) mindestens einen Perfluorpolyether mit einem aktiven Wasserstoff und
(b-2) mindestens ein Monomer mit einem aktiven Wasserstoff und einer Kohlenstoff-Kohlenstoff-Doppelbindung.

**7.** Zusammensetzung nach einem der Ansprüche 1-6, wobei (a)(i) eines oder mehrere, ausgewählt aus Pentaerythritoltriacrylat (PET3A), Pentaerythritoltetraacrylat (PET4a), Dipentaerythritolpentaacrylat (DPPA), Dipentaerythritolhexaacrylat (DPHA), Tripentaerythritolheptaacrylat (TP7A), Tripentaerythritoloctaacrylat (TPOA) und Trimethylolpropantriacrylat (TMPTA), ist.

**8.** Zusammensetzung nach Anspruch 1-7, wobei in (b)(ii) jedes R' H ist und X n-Hexylen ist.

**9.** Hartbeschichtung, die durch Härten der UV-härtbaren Zusammensetzung nach einem der Ansprüche 1-8 mit UV-Licht erhältlich ist.

**10.** Hartbeschichtung nach Anspruch 9, wobei das Härten unter Inertgasatmosphäre, vorzugsweise unter Stickstoffatmosphäre, durchgeführt wird.

**11.** Hartbeschichtung nach Anspruch 9 oder 10, die

(i) einen Wasserkontaktwinkel von > 103° und/oder
(ii) einen n-Hexadecankontaktwinkel von > 55° und/oder
(iii) einen Diiodmethankontaktwinkel von > 83° und
(iv) optional eine freie Oberflächenenergie von < 20 mN/m aufweist, wobei die Kontaktwinkel und die freie Oberflächenenergie gemäß den in der Beschreibung erwähnten Verfahren gemessen werden.

**12.** Oberflächenbehandelter Gegenstand, der ein Substrat und eine Hartbeschichtung nach einem der Ansprüche 9-11 auf einer oder mehreren Oberflächen des Substrats umfasst.

**13.** Oberflächenbehandelter Gegenstand nach Anspruch 12, wobei das Substrat ein Kunststoffsubstrat und vorzugsweise ein Kunststoffsubstrat, ausgewählt aus Poly(methylmethacrylat) (PPMA), Polycarbonat (PC), Polyethylenterephthalat (PET) und Triacetylcellulose (TAC), ist.

**14.** Verfahren zur Herstellung des oberflächenbehandelten Gegenstands nach Anspruch 12 oder 13, umfassend das Auftragen der Zusammensetzung nach einem der Ansprüche 1-8 auf die Oberfläche eines Substrats und das Härten der aufgetragenen Zusammensetzung, vorzugsweise unter Stickstoffatmosphäre.

## Revendications

**1.** Composition durcissable par UV, comprenant :

(a) 75 à 95 % en poids d'une composition de résine durcissable à base de (méth)acrylate, comprenant

(i) 40 à 60 % en poids, sur la base de la quantité totale de (a), d'un ou de plusieurs esters d'acrylate ayant 3 groupes acrylate ou plus ; et
(ii) 40 à 60 % en poids, sur la base de la quantité totale de (a), d'au moins un parmi un composé parmi un uréthane à base de (méth)acrylate, un ester à base d'acide (méth)acrylate, un époxy à base de (méth)acrylate et des oligomères de silicone à base de (méth)acrylate ;

(b) 5 à 25 % en poids d'un mélange de

(i) 0,5 à 50,0 % en poids, sur la base de la quantité totale de (b), d'un composé ayant un groupe perfluoropolyéther (PFPE) et un fragment durcissable ; et
(ii) 50,0 à 99,5 % en poids, sur la base de la quantité totale de (b), d'au moins un monomère de di(méth)acrylate qui est représenté par la formule

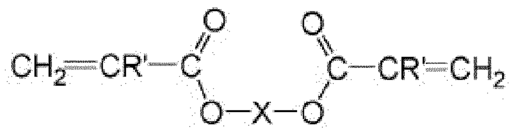

dans laquelle

les R' sont chacun indépendamment H, un méthyle ou un halogène, et
X est un alkyle linéaire en $C_{2-16}$, un $(CH_2)_n$-cycloalkyle en $C_{3-16}$-$(CH_2)_m$, dans laquelle n et m sont indépendamment un nombre entier de 1 à 18, ou un (poly)oxyde d'alkylène linéaire ayant un groupe méthylène sur les deux extrémités terminales ;

dans laquelle (a) ne contient pas de composés à base de F et les quantités de (a) et (b) représentent ≥ 80 % en poids de la matière non volatile totale dans la composition.

2. Composition selon la revendication 1, qui comprend en outre un ou plusieurs solvants organiques, des initiateurs de photopolymérisation, des absorbeurs d'UV (UVA), des photostabilisants à base d'amine encombrée (HALS), des agents de nivellement, des agents antimousse et des agents mouillants.

3. Composition selon la revendication 1 ou la revendication 2, dans laquelle la matière non volatile représente jusqu'à 20 à 50 % en poids, sur la base du total de la composition.

4. Composition selon l'une quelconque des revendications 1 à 3, dans laquelle (b) (i) comprend une structure d'isocyanate ou d'isocyanurate.

5. Composition selon l'une quelconque des revendications 1 à 4, dans laquelle (b) (i) est un composé de formule (1) :

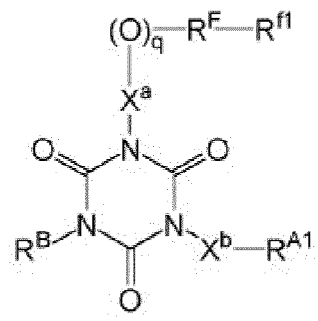

dans laquelle

$R^{f1}$ est un alkyle en $C_{1-16}$ facultativement substitué avec F ;
$R^F$ est un groupe perfluoropolyéther divalent ;
*q* est 0 ou 1 ;
$X^a$ est une liaison simple ou un groupe organique divalent ;
$R^{A1}$ est un groupe contenant $OR^{Ac}$ ;
$R^{Ac}$ est un groupe (méth)acrylate ;
$X^b$ est un groupe organique divalent contenant au moins deux hétéroatomes ; et
$R^B$ est $R^{f1}$-$X^a$- ou $R^{A1}$-$X^b$-.

6. Composition selon l'une quelconque des revendications 1 à 4, dans laquelle (b) (i) peut être obtenu par la réaction

(A) d'un triisocyanate préparé par la trimérisation d'un diisocyanate, et
(B) d'une combinaison d'au moins deux composés contenant un hydrogène actif, laquelle combinaison comprend :

(B-1) au moins un perfluoropolyéther ayant un hydrogène actif, et
(B-2) au moins un monomère ayant un hydrogène actif et une liaison double carbone-carbone.

7. Composition selon l'une quelconque des revendications 1 à 6, dans laquelle (a) (i) est un ou plusieurs composés sélectionnés parmi le triacrylate de pentaérythritol (PET3A), le tétraacrylate de pentaérythritol (PET4a), le pentaacrylate de dipentaérythritol (DPPA), l'hexaacrylate de dipentaérythritol (DPHA), l'heptaacrylate de tripentaérythritol (TP7A), l'octaacrylate de tripentaérythritol (TPOA) et le triacrylate de triméthylolpropane (TMPTA).

8. Composition selon les revendications 1 à 7, dans laquelle, dans (b) (ii), chaque R' est H et X est un n-hexylène.

9. Revêtement dur qui peut être obtenu par le durcissement de la composition durcissable par UV selon l'une quelconque des revendications 1 à 8 avec une lumière UV.

10. Revêtement dur selon la revendication 9, dans lequel le durcissement est effectué sous une atmosphère de gaz inerte, de préférence sous une atmosphère d'azote.

11. Revêtement dur selon la revendication 9 ou la revendication 10, qui présente

(i) un angle de contact avec l'eau > 103°, et/ou
(ii) un angle de contact avec le n-hexadécane > 55°, et/ou
(iii) un angle de contact avec le diiodométhane > 83° et
(iv) facultativement une énergie libre de surface < 20 mN/m, dans lequel les angles de contact et l'énergie libre de surface sont déterminés selon les procédés mentionnés dans la description.

**12.** Article traité en surface qui comprend un substrat et le revêtement dur selon l'une quelconque des revendications 9 à 11 sur une ou plusieurs surfaces du substrat.

**13.** Article traité en surface selon la revendication 12, dans lequel le substrat est un substrat en plastique, et de préférence un substrat en plastique sélectionné parmi un poly(méthacrylate de méthyle) (PPMA), un polycarbonate (PC), un polytéréphtalate d'éthylène (PET) et une triacétylcellulose (TAC).

**14.** Procédé de production de l'article traité en surface selon la revendication 12 ou la revendication 13, comprenant une application de la composition selon l'une quelconque des revendications 1 à 8 sur la surface d'un substrat et un durcissement de la composition appliquée de préférence sous une atmosphère d'azote.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016210995 A
- JP 2013132785 A
- EP 1411073 A1


### Non-patent literature cited in the description


- *CHEMICAL ABSTRACTS,* 43048-08-04
- **OWENS et al.** *J. Appl. Polym. Sci,* 1969, vol. 13, 1741-1747